# EUROPÄISCHE PATENTSCHRIFT

(11) **EP 3 317 073 B1**
(45) Veröffentlichungstag und Bekanntmachung des Hinweises auf die Patenterteilung: **05.08.2020**
(21) Anmeldenummer: 16734290.6
(22) Anmeldetag: 29.06.2016
(51) Int. Cl.: B29C 45/56, B29C 45/00

(54) **VERFAHREN ZUR BEEINFLUSSUNG DER ORIENTIERUNG VON FÜLLSTOFFEN IN EINER KUNSTSTOFFSCHMELZE WÄHREND DER HERSTELLUNG EINES FORMKÖRPERS IN EINEM SPRITZGIESSVERFAHREN**
METHOD FOR INFLUENCING THE ORIENTATION OF FILLERS IN A PLASTICS MELT DURING PRODUCTION OF A MOULDING IN AN INJECTION-MOULDING PROCESS
PROCÉDÉ PERMETTANT D'AGIR SUR L'ORIENTATION DE MATIÈRES DE CHARGE DANS DE LA MATIÈRE PLASTIQUE FONDUE PENDANT LA FABRICATION D'UN CORPS MOULÉ PAR UN PROCÉDÉ DE MOULAGE PAR INJECTION

(30) Priorität: 02.07.2015 DE 102015212429
(43) Veröffentlichungstag der Anmeldung: 09.05.2018
(73) Patentinhaber: Universität Stuttgart, 70174 Stuttgart (DE)
(72) Erfinder: SKRABALA, Otto, 85757 Karlsfeld (DE); KOSLOWSKI, Tristan, 70178 Stuttgart (DE); HAUFE, Sarah, 73650 Winterbach (DE)
(74) Vertreter: Altmann Stößel Dick Patentanwälte PartG mbB
(86) Internationale Anmeldenummer: PCT/EP2016/065114
(87) Internationale Veröffentlichungsnummer: WO 2017/001461

(56) Entgegenhaltungen:
- EP-A1- 1 008 432
- EP-A2- 1 878 555
- WO-A1-01/17747
- WO-A1-2007/098628

## Beschreibung

Die vorliegende Erfindung betrifft ein Verfahren zur Beeinflussung der Orientierung von Füllstoffen in einer Kunststoffschmelze während einer Herstellung eines Formkörpers in einem Spritzgießverfahren.

### Stand der Technik

Aus dem Stand der Technik sind eine Vielzahl von Vorrichtungen und Verfahren zur Herstellung von Formkörpern mittels Spritzgießverfahren bekannt. In dieser Art von Verfahren wird ein Kunststoff, insbesondere ein Thermoplast, in einen Schmelzzustand erwärmt und anschließend in dem Schmelzzustand unter einer Anwendung von Druck in eine Kavität eines Werkzeugs, welche auch als "Formnest" bezeichnet wird, eingebracht. Hierbei bildet die Kunststoffschmelze während der Füllung der Kavität eine oder mehrere Fließfronten aus. Durch Abkühlen oder Abkühlenlassen der Kunststoffschmelze in der Kavität des Werkzeugs, welche zumindest teilweise unter Aufrechterhaltung des Drucks erfolgt, wird der Formkörper gebildet, welcher schließlich durch Entformen aus der Kavität des Werkzeugs entnommen werden kann. Mit dem Spritzgießverfahren lassen sich einfache, insbesondere aber auch komplexe dreidimensionale Formkörper herstellen. Daher eignet sich das Spritzgießverfahren neben der Herstellung von Verpackungen und allgemeinen Funktionsteilen auch zur Herstellung von technischen Funktionsteilen.

Eine abgewandelte Form des herkömmlichen Spritzgießverfahrens stellt das so genannte "Spritzprägen" dar. Als "Spritzprägen" wird ein Spritzgießverfahren bezeichnet, bei dem dickwandige Bauteile während des Abkühlens mit einem Druck möglichst über die gesamte Bauteilfläche beaufschlagt werden, insbesondere um eine Schwindung des Kunststoffes beim Abkühlen auszugleichen und somit formtreue Bauteile mit minimiertem Verzug herstellen zu können. Hierzu weist das Werkzeug ein variables Kavitätsvolumen auf, welches sich während der Einspritzphase und/oder der Nachdruckphase ändern kann. Vorzugsweise verfügt das Werkzeug über einen Prägespalt, welcher dazu eingerichtet ist, um ein Zusammenfahren von zwei Formplatten des Werkzeugs, welche die Kavität ausbilden, zu ermöglichen. Um zu verhindern, dass während des Spritzprägens bei geschlossenem Prägespalt Kunststoffschmelze in eine Trennebene des Werkzeugs eindringt, ist eine entsprechende Einrichtung, bevorzugt eine Tauchkante vorgesehen, die es ermöglicht, dass die Kavität trotz Prägespalt nach außen vollständig verschlossen sein kann. Die durch Öffnen des Prägespalts vergrößerte Kavität wird vorzugsweise zu ca. 80 % bis 95 % mit Kunststoffschmelze gefüllt, was in etwa 100 % eines Volumens des zu fertigenden Formkörpers entspricht. Bei einem anschließenden Schließen des Werkzeugs kann die Kunststoffschmelze durch eine Schließbewegung, welche insbesondere in Form eines Prägehubs erfolgt, verpresst werden. Das Spritzprägen kann mit hydraulischen oder elektrischen Schließeinheiten umgesetzt werden. Um einen komplexen Spritzprägeprozess durchzuführen, können darüber hinaus eine reaktionsschnelle Hydraulik und hochauflösende Messsysteme eingesetzt werden. Eine exemplarische Darstellung des Spritzgießens findet sich beispielsweise in C. Jaroschek, Spritzgießen für Praktiker, Hanser, 2003, Seite 108 bis 110.

Bei einer Betrachtung der Abläufe während des Spritzgieß- bzw. Spritzprägeprozesses ist eine Differenzierung in Vorgänge möglich, die in Hauptachsenrichtung oder in Nebenachsenrichtung ablaufen, siehe z.B. SCHÄFER, O.: Besser geprägt: Spritzprägen - ein Verfahren für viele Anwendungen, ARBURG today (2011), Nr. 46, S. 26-27. In Hauptachsenrichtung findet sowohl die Werkzeugbewegung des Öffnens und Schließens als auch das Einspritzen und Dosieren des Kunststoffs statt. In Nebenachsenrichtung erfolgen üblicherweise das Auswerfen des Formkörpers, die Kernzugfunktionen und Bewegungen der Einspritzeinrichtung. Bei Einsatz des Hauptachsenprägens kann eine Abdichtung des Werkzeugs über eine Tauchkante oder über bewegliche Prägerahmen, welcher das nicht geschlossene Werkzeug durch Federkraft und/oder hydraulisch abdichten kann, erfolgen. Bei Einsatz des Nebenachsenprägens können dagegen Stempel eingesetzt werden, welche sich mittels Kernzugfunktionen oder über Auswerfer regeln lassen.

In der Kunststofftechnik werden häufig Füllstoffe eingesetzt, vor allem um WerkstoffEigenschaften des Kunststoffs beeinflussen zu können. Die Füllstoffe werden in der Regel dem Kunststoff, welcher zur Herstellung des Formkörpers eingesetzt wird, beigefügt oder zugemischt. Im Falle von "anisometrischen" Füllstoffen, welche eine Vorzugsrichtung aufweisen und zu denen insbesondere Fasern und Plättchen gerechnet werden, nehmen die Füllstoffe während der Verarbeitung des Kunststoffs in dem Spritzgießverfahren eine bevorzugte Orientierung ein. In der Praxis hängt die Orientierung der Füllstoffe in erster Linie von Scherkräften ab, welche während der Formfüllung auf die Füllstoffe einwirken. Die Fließfronten verfügen in Folge des Einsatzes der gefüllten Kunststoffschmelzen über ein hohes Verhältnis von Volumina zwischen einer auch als "Scherschicht" bezeichneten Randschicht an Wänden der Kavität und einer Kernschicht im Inneren der Kavität. Während die Füllstoffe in der breiten Randschicht überwiegend parallel zur Fließrichtung orientiert sind, sind nur in der Kernschicht vergleichsweise wenige Füllstoffe vorhanden, deren Orientierung senkrecht zur Fließrichtung ausgerichtet ist. Für weitere Einzelheiten wird auf die Darstellung in den Ausführungsbeispielen und den Figuren verwiesen.

Im herkömmlichen Spritzgießverfahren sind die Füllstoffe daher überwiegend in Fließrichtung orientiert, vor allem bei dünnwandigen Bauteilen aufgrund der darin auftretenden, verhältnismäßig dünnen Kernschicht. Somit können Eigenschaften des hergestellten Formkörpers am stärksten in Fließrichtung beeinflusst werden, während sich in die anderen Raumrichtungen, in welchen die Füllstoffe üblicherweise nicht oder kaum orientiert sind, die Eigenschaften des Formkörpers mittels Füllstoffen folglich nur geringfügig beeinflussen lassen. Nicht in allen Formkörpern ist es jedoch wünschenswert, dass die Eigenschaften vor allem in Fließrichtung verbessert werden. Beispielsweise soll bei wärmeleitfähigen Kunststoffen, denen bevorzugt wärmeleitfähige Füllstoffe zugegeben werden können, die Wärmeleitfähigkeit vor allem in Richtung der Dicke des Formkörpers, welche bevorzugt senkrecht zur Fließrichtung der Fließfront angeordnet sein kann, erhöht werden. Oft werden derartige Bereiche des Formkörpers dazu eingesetzt, um entstehende Verlustwärme innerhalb des Formkörpers an die Umgebung abzuleiten.

Mit den aus dem Stand der Technik bekannten Spritzgießverfahren ist es jedoch kaum möglich, die Füllstoffe gezielt auszurichten, insbesondere nicht in Richtung der Dicke des Formkörpers; vielmehr ergibt sich die Ausrichtung der Füllstoffe aus den während der Verarbeitung auftretenden Bedingungen, zu welchen vor allem die Geometrie des Werkzeugs und die Randbedingungen während des Einfüllvorgangs der Kunststoffschmelze in die Kavität gerechnet werden. Hierzu zählen in erster Linie das Material des eingesetzten Kunststoffs, die Einspritzgeschwindigkeit, die Temperaturen des Werkzeugs und/oder der Kunststoffschmelze sowie der Flussweg, den die Kunststoffschmelze beim Eintritt in die Kavität und/oder innerhalb der Kavität nimmt. Eine Erhöhung der Wandtemperatur der Kavität kann zum Beispiel dazu führen, dass sich ein Anteil an Füllstoffen auch senkrecht zur Fließrichtung ausrichten lässt, wobei der in der Praxis erzielbare Effekt eher gering ist. Weiterhin kann durch eine Erhöhung der Höhe der Kavität, welcher der Dicke des fertigen Formteils entspricht, ein größerer Anteil der Füllstoffe senkrecht zur Fließrichtung orientiert werden. Diese Maßnahme ist jedoch häufig nicht vorteilhaft, da dickere Bauteile eine geringere Abkühlgeschwindigkeit aufweisen, wodurch sich der Verfahrensablauf oftmals verlangsamt und verteuert.

Auch beim Spritzprägen, bei welchem während der Verarbeitung der Kunststoffschmelze die Höhe der Kavität durch den Prägehub verringert werden kann, können sich die Füllstoffe durch das Prägen stärker in Fließrichtung ausrichten. Da bei der herkömmlichen Verarbeitung jedoch die Mehrzahl der Füllstoffe in Fließrichtung orientiert ist, kann das Spritzprägen daher nicht dazu eingesetzt werden, um eine andere Orientierung der Füllstoffe im Formkörper zu erzeugen; das Spritzprägen verstärkt vielmehr in der Regel noch die Effekte der herkömmlichen Art der Verarbeitung.

DE 10 2010 052 180 A1 offenbart ein Verfahren zur Herstellung von Faserverbund-Kunststoffbauteilen aus Textileinlegern und einem thermoplastischen Matrixmaterial. Hierzu wird ein Textileinleger vorerwärmt, in die Kavität eines Spritzguss-Werkzeugs eingelegt, vorgeformt und temperiert, bis anschließend das thermoplastische Matrixmaterial eingespritzt wird, wodurch der Textileinleger mit dem thermoplastischen Matrixmaterial imprägniert wird. Dann werden Schwingungen in dem Textileinleger erzeugt und das Faserverbund-Kunststoffbauteil durch Abkühlen hergestellt. Zur Temperierung des Textileinlegers kann das Matrixmaterial nanoskalige paramagnetische Partikeln enthalten, wobei mittels eines externen Wechselmagnetfelds ein Magnetfeld in dem Matrixmaterial erzeugt werden kann. Durch den als "Superparamagnetismus" bezeichneten Effekt können sich einzelne atomare magnetische Momente in den Nanopartikeln parallel zueinander anordnen. Nach dem Imprägnieren des Textileinlegers mit dem thermo-plastischen Matrixmaterial kann das Werkzeug geöffnet, zusätzliches Matrixmaterial in die Kavität eingespritzt und erneut geschlossen werden. Hierbei wird das Werkzeug geöffnet gehalten, um eine Kontraktion des imprägnierten Textileinlegers zu erreichen.

Weitere Offenbarungen in Bezug auf die Aspekte der vorliegenden Erfindung finden sich in DE 10 2006 008 184 A1, DE 10 2005 047 266 A1 und DE 11 2006 000 546 T5.

EP 1 008 432 A1 offenbart, dass zunächst ein Werkzeug, welches eine Kavität zur Aufnahme einer Kunststoffschmelze aufweist, bereitgestellt und ein fester Abstand zwischen den Formplatten des Werkzeugs eingestellt wird, bevor anschließend eine Kunststoffschmelze in die Kavität eingefüllt wird. Nach einer Verweildauer wird die Kavität durch Rückwärtsbewegung einer der Formplatten entspannt. Nach einer Abkühlphase unter Aufrechterhaltung des Drucks erfolgt schließlich ein Entformen des Formkörpers aus der Kavität. In Bezug auf Füllstoffe wird offenbart, dass ein Einfüllen der Kunststoffschmelze in die Kavität bei geringem Einfülldruck eine Fehlorientierung oder ein Brechen von Fasern vermeiden kann. Weiterhin wird ausdrücklich darauf hingewiesen, dass die Entspannung der Kavität durch Rückwärtsbewegung einer der Formplatten so erfolgt, dass keine Luft in die Kavität eindringen kann. Somit erfolgt hier kein Öffnungshub in Form eines Öffnens mindestens eines Teilbereichs der Kavität, wobei Quell- und/oder Dehnströmungen erzeugt werden, welche die Orientierung von Füllstoffen in der Kunststoffschmelze beeinflussen, bevor im Anschluss an den Öffnungshub das Aufbringen eines Druckes auf die Kunststoffschmelze erfolgt.

EP 1 878 555 A2 offenbart ein Bereitstellen eines Werkzeugs, welches eine Kavität zwischen zwei Formplatten zur Aufnahme einer Kunststoffschmelze aufweist. Nach Einbringen der Kunststoffschmelze in die Kavität erfolgt eine Entspannung der Kunststoffschmelze in der Kavität mit zwei verschiedenen Geschwindigkeiten während zwei verschiedenen Zeiträumen, bevor ein Entformen des Formkörpers aus der Kavität erfolgt. Hierbei kann der Formkörper durch die Verwendung einer Kunststoffschmelze, die überkritisches CO2 als Schaummittel und Glasfasern als Verstärkungsfasern aufweist, erhalten werden. Somit erfolgt hier kein Öffnungshub in Form eines Öffnens mindestens eines Teilbereichs der Kavität, wobei Quell- und/oder Dehnströmungen erzeugt werden, welche die Orientierung von Füllstoffen in der Kunststoffschmelze beeinflussen, bevor im Anschluss an den Öffnungshub das Aufbringen eines Druckes auf die Kunststoffschmelze erfolgt. Vielmehr wird ein Schaummittel benötigt, um die Orientierung der Glasfasern in der Kunststoffschmelze zu beeinflussen.

Vor diesem Hintergrund besteht die Aufgabe der vorliegenden Erfindung, ein Verfahren zur Beeinflussung einer Orientierung von Füllstoffen in einer Kunststoffschmelze während einer Herstellung eines Formkörpers in einem Spritzgießverfahren bereitzustellen, das die Nachteile und Einschränkungen des Standes der Technik zumindest teilweise überwindet.

Es soll insbesondere ein Verfahren vorgeschlagen werden, mit welchem die Orientierung der Füllstoffe in der Kunststoffschmelze beeinflusst werden kann, um auf diese Weise Eigenschaften des fertigen Formkörpers möglichst gut an die vorgesehene Anwendung anpassen und die eingesetzten Füllstoffe möglichst optimal nutzen zu können, möglichst ohne dass bauliche Maßnahmen an dem Werkzeug erforderlich sind.

### Offenbarung der Erfindung

Diese Aufgabe wird gelöst durch ein Verfahren zur Beeinflussung der Orientierung von Füllstoffen in einer Kunststoffschmelze während einer Herstellung eines Formkörpers in einem Spritzgießverfahren mit den Merkmalen der unabhängigen Patentansprüche. Vorteilhafte Ausgestaltungen finden sich in den abhängigen Patentansprüchen.

Die vorliegende Erfindung betrifft ein Verfahren zur Beeinflussung der Orientierung von Füllstoffen in einer Kunststoffschmelze während einer Herstellung eines Formkörpers in einem Spritzgießverfahren. Es wird vorgeschlagen, durch gezielte Bewegungen des Werkzeugs aktiv die Orientierung der Füllstoffe in der Kunststoffschmelze zu beeinflussen und zu steuern. Unter dem Begriff der "Orientierung" wird hierbei die Ausrichtung der Füllstoffe, welche in anisometrischer Form vorliegen und daher eine Vorzugsrichtung aufweisen, in der Kunststoffschmelze verstanden. Zu so genannten "anisometrischen" Füllstoffe werden insbesondere quasi-eindimensionale Körper wie Fasern, in welchen die als Länge bezeichnete Ausdehnung des Körpers in einer Raumrichtung die Länge in die beiden anderen Raumrichtungen übersteigt, und quasi-zweidimensionale Körper wie Plättchen, in welchen die Ausdehnung des Körpers in zwei Raumrichtungen die Ausdehnung des Körpers in die dritte Raumrichtung übertrifft, gezählt. Hierbei nehmen die Füllstoffe während der Verarbeitung der Kunststoffschmelze in dem Spritzgießverfahren, insbesondere aufgrund von hierbei auftretenden Scherkräften, eine bevorzugte Orientierung ein.

Die Einstellung der gezielten Orientierung der Füllstoffe in der Kunststoffschmelze erfolgt in dem vorliegenden Verfahren durch eine oder mehrere Öffnungsbewegungen des Werkzeugs während der Einspritzphase und/oder der Nachdruckphase in Verbindung mit einer nachfolgenden Prägebewegung in der Nachdruckphase. Durch Ausübung der mindestens einen Öffnungsbewegung werden Quell- und/oder Dehnströmungen in der Kunststoffschmelze hervorgerufen, welche die Orientierung der Füllstoffe in der Kunststoffschmelze derart beeinflussen können, dass eine erhöhte Ausrichtung der Füllstoffe in Richtung der Dicke des Formkörpers auftritt.

Das vorliegende Verfahren umfasst die im Folgenden im Einzelnen beschriebenen Schritte a) bis e), welche bevorzugt in der angegebenen Reihenfolge durchgeführt werden können. Hierbei können die einzelnen Schritte nacheinander ausgeführt werden; allerdings kann es auch vorteilhaft sein, wenn, je nach den spezifischen Anforderungen, ein oder mehrere Schritte zumindest teilweise auch gleichzeitig durchgeführt werden. Dies kann insbesondere auf Schritt c) zutreffen, welcher vorzugsweise vor oder während Schritt d) durchgeführt werden kann.

Hierbei umfasst das vorliegende Verfahren zur Beeinflussung der Orientierung von Füllstoffen in einer Kunststoffschmelze während einer Herstellung eines Formkörpers in einem Spritzgießverfahren die folgenden Schritte:
a) Bereitstellen eines Werkzeugs, welches mindestens eine Kavität zur Aufnahme einer Kunststoffschmelze aufweist;
b) Einbringen der Kunststoffschmelze in die Kavität unter Druck;
c) Aufbringen eines Druckes auf die Kunststoffschmelze in der Kavität;
d) Abkühlen oder Abkühlenlassen der Kunststoffschmelze in der Kavität zumindest teilweise unter Aufrechterhaltung des Drucks, wodurch der Formkörper gebildet wird; und
e) Entformen des Formkörpers aus der Kavität;

Erfindungsgemäß wird während Schritt b) und/oder während Schritt c) mindestens ein Öffnungshub (132) in Form eines Öffnens mindestens eines Teilbereichs der Kavität (114) derart vorgenommen, dass in zumindest einem Teil der in der Kavität (114) vorliegenden Kunststoffschmelze (112) Quell- und/oder Dehnströmungen, welche die Orientierung der Füllstoffe (122) in der Kunststoffschmelze (112) beeinflussen, hervorgerufen werden, und im Anschluss an den Öffnungshub (132) das Aufbringen eines Druckes auf die Kunststoffschmelze (112) gemäß Schritt c) erfolgt.

Das vorliegende Verfahren kann vorzugsweise als ein diskontinuierliches Verfahren ausgebildet sein, worunter hier eine Vorgehensweise verstanden wird, gemäß der jeweils ein Formkörper nach dem anderen Formkörper hergestellt wird, wobei das Verfahren jeweils nach dem Entformen eines ersten Formkörpers aus der Kavität des Werkzeugs gemäß Schritt e) erneut mit dem Einfüllen weiterer Kunststoffschmelze gemäß Schritt b) zur Herstellung eines weiteren Formkörpers fortgesetzt werden kann.

Gemäß Schritt a) wird das Werkzeug bereitgestellt, welches zur Durchführung eines Spritzgießverfahrens eingerichtet ist. Unter dem "Werkzeug" wird hierbei ein mechanisch stabiler Körper verstanden, welcher zur Vornahme eines Angusses über mindestens eine Öffnung zum Einfüllen der Kunststoffschmelze und über mindestens eine Kavität verfügt, welche zur Aufnahme einer Kunststoffschmelze eingerichtet ist und die im wesentlichen Geometrie und Oberflächenstruktur des herzustellenden Formkörpers festlegt. Insbesondere um die Herstellung des Werkzeugs und/oder ein Ausbilden der Kavität und/oder das Entformen des Formkörpers aus der Kavität des Werkzeugs auf einfache Weise zu ermöglichen, kann das Werkzeug hierbei vorteilhaft auch aus mindestens zwei miteinander verbundenen Teilen, die auch als "Formplatten" bezeichnet werden, bestehen, welche gegeneinander beweglich gelagert sein können. Das Werkzeug kann darüber hinaus vorzugsweise über mindestens eine Einrichtung zur Erwärmung und/oder Abkühlung mindestens eines Teils des Werkzeugs verfügen, mittels welcher die Kunststoffschmelze im Werkzeug aktiv erwärmt bzw. abgekühlt werden kann.

Gemäß Schritt b) wird die Kunststoffschmelze derart unter Druck in die Kavität des Werkzeugs eingefüllt, dass die mindestens eine Kavität des Werkzeugs vorzugsweise vollständig mit der Kunststoffschmelze gefüllt wird. Hierbei ist das Werkzeug geschlossen, so dass das Innere des Werkzeugs die mindestens eine hohle Kavität zur Aufnahme der Kunststoffschmelze ausbildet.

Als die Kunststoffschmelze, welche während Schritt b) in das Werkzeug eingefüllt wird, dient ein in einen Schmelzzustand gebrachter Kunststoff, insbesondere ein Thermoplast, welches durch Abkühlen oder Abkühlenlassen aus dem Schmelzzustand in einen festen Zustand übergehen kann, wobei der Formkörper in dem festen Zustand vorliegt. Der Kunststoff ist hierbei gefüllt, wobei der gefüllte Kunststoff eine Kunststoffmatrix aufweist, in welche die anisometrischen Füllstoffe, insbesondere die Fasern und/oder Plättchen, eingebracht sind. Der Kunststoff, die Kunststoffmatrix und/oder die hierein eingebrachten Füllstoffe können insbesondere klar, durchsichtig oder durchscheinend, aber, je nach gewünschter Ausgestaltung, auch intransparent sein.

Das Einfüllen der Kunststoffschmelze unter Druck in die Kavität des geschlossenen Werkzeugs kann hierbei mittels mindestens einer Einspritzeinrichtung zum Einbringen der Kunststoffschmelze in die Kavität, vorzugsweise mittels einer Schnecke, welche rotierbar und/oder axial in einem Zylinder beweglich gelagert sein kann, erfolgen. An einem Ende der Schnecke kann sich hierbei ein Einfülltrichter zum Beschicken mit dem Kunststoff, vorzugsweise in Form eines Granulats, am anderen Ende der Schnecke, welche auch als "Schneckenspitze" bezeichnet werden kann, eine Düse befinden. Der Kunststoff in Form des Granulats kann in Richtung der Schneckenspitze gefördert werden, wobei der Kunststoff insbesondere durch in dem Zylinder vorhandene Wärme und/oder durch auftretende Friktionswärme, welche bei einem Zerteilen und/oder Scheren des Granulats entstehen kann, in den Zustand der Kunststoffschmelze übergehen kann.

Gemäß Schritt c) erfolgt ein Aufbringen eines Druckes auf die Kunststoffschmelze in der Kavität, wodurch die Kunststoffschmelze in die für den späteren Formkörper vorgesehene Form gebracht wird. Nach dem Einfüllen der Kunststoffschmelze in die mindestens eine Kavität des Werkzeugs ist es vorteilhaft, wenn die Schnecke den am Anguss anliegenden Druck noch für eine bestimmte Zeit weiterhin aufrechterhält. Dieses auch als "Nachdruckphase" bezeichnete Zeitintervall kann insbesondere dafür dienen, um eine bei der Abkühlung der Kunststoffschmelze auftretende Schwindung des Kunststoffs zu kompensieren sowie um eine Ausbildung von Einfallstellen und/oder Lunkern bei der Abkühlung der Kunststoffschmelze zu vermeiden.

Gemäß Schritt d) erfolgt im Anschluss an Schritt c) und/oder zumindest teilweise zeitgleich mit Schritt c) während einer so genannten "Abkühlphase" ein Abkühlen oder Abkühlenlassen der Kunststoffschmelze in der Kavität des Werkzeugs, wodurch der gewünschte Formkörper gebildet wird. Hierzu kann das Werkzeug vorzugsweise über mindestens eine Einrichtung zur Abkühlung mindestens eines Teils des Werkzeugs verfügen, insbesondere um den Abkühlvorgang zu beschleunigen. Auch während der Abkühlung wird zumindest teilweise der an dem Anguss anliegende Druck aufrechterhalten. Allerdings kann nach einiger Zeit der anliegende Druck verringert und vollständig weggenommen werden; der nach dem Wegnehmen des Drucks ablaufende Verfahrensschritt kann auch als "Restkühlzeit" bezeichnet werden. Insbesondere in dem oben beschriebenen diskontinuierlichen Verfahren kann die Restkühlzeit dazu eingesetzt werden, um die Schnecke für eine Durchführung eines weiteren Einfüllschritts gemäß Schritt b) vorzubereiten.

Gemäß Schritt e) erfolgt, vorzugsweise am Anschluss an die Restkühlzeit, ein Entformen des Formkörpers aus der Kavität des Werkzeugs. Hierzu wird das Werkzeug, welches derart ausgestaltet sein kann, dass der damit hergestellte Formkörper auf möglichst einfache Weise aus dem Werkzeug entnommen oder geworfen werden kann, geöffnet. Beispielsweise verfügt das Werkzeug hierfür einen oder mehrere Auswerfer.

Entsprechend dem vorliegenden Verfahren wird während Schritt b) und/oder während Schritt c) mindestens ein Öffnungshub in Form eines Öffnens mindestens eines Teilbereichs der Kavität vorgenommen und im Anschluss an den Öffnungshub ein Druck auf die Kunststoffschmelze gemäß Schritt c) aufgebracht. Diese Maßnahme dient dazu, um die Orientierung der Füllstoffe in der Kunststoffschmelze zu beeinflussen. Unter dem Begriff des "Öffnungshubs" wird hierbei ein im Bereich der Spritzgießverfahren bekanntes Öffnen des mindestens einen Teilbereichs der Kavität verstanden, welches hier derart durchgeführt wird, dass in Folge des Öffnungshubs Strömungen in der Kunststoffschmelze hervorgerufen werden, welche die Orientierung der Füllstoffe innerhalb der Kunststoffschmelze beeinflussen. Als Folge des Öffnungshubs kann die Kunststoffschmelze bevorzugt eine Expansion erfahren, welche einerseits die Ausrichtung der in der Kunststoffschmelze vorhandenen Füllstoffe bevorzugt senkrecht zu Fließrichtung ändern und andererseits in der Kunststoffschmelze das eingangs beschriebene Verhältnis zwischen dem Volumen der Randschicht zu dem Volumen der Kernschicht verringern kann. Dadurch nimmt eine im Vergleich zu einem Verfahren ohne Öffnungshub größere Anzahl an Füllstoffen eine Orientierung ein, welche senkrecht zur Fließrichtung der Kunststoffschmelze steht. Auf diese Weise lässt sich somit die Ausrichtung der Füllstoffe in der Kunststoffschmelze beeinflussen.

Zur Ausführung des mindestens einen Öffnungshubs eignen sich jegliche bewegliche Bestandteile des Werkzeugs, welche dazu eingerichtet sind, um eine Öffnung des mindestens einen Teilbereichs der Kavität herbeizuführen. Besonders bevorzugte Ausgestaltungen ermöglichen hierbei die Öffnung des Teilbereichs der Kavität, ohne dass die in der Kavität vorhandene Kunststoffschmelze aus der Kavität austreten kann. Diese Ausgestaltungen weisen darüber hinaus den weiteren Vorteil auf, dass sie keine zusätzlichen baulichen Maßnahmen am Werkzeug erfordern.

In einer besonders bevorzugten Ausgestaltung weist das Werkzeug mindestens zwei unabhängig voneinander bewegliche Formplatten auf, welche derart ausgestaltet sind, dass sie die Wände der Kavität ausbilden, wobei eine der beiden Formplatten über eine Öffnung verfügt, in welche eine Einspritzeinrichtung eingebacht ist, welche das Einbringen der Kunststoffschmelze in die Kavität ermöglicht. In dieser Ausgestaltung wird der mindestens eine Öffnungshub durch eine Bewegung mindestens einer der Formplatten des Werkzeugs ausgeführt. Beispielsweise kann bei zwei vorhandenen Formplatten nur eine der beiden Formplatten von der anderen der beiden Formplatten, welche fest bleibt, wegbewegt werden. Alternativ können aber auch beide Formplatten gleichzeitig eine Bewegung ausführen, die derart ausgestaltet ist, dass sie sich voneinander weg bewegen. Weitere Möglichkeiten, insbesondere für mehr als zwei vorhandene Formplatten, sind denkbar.

Durch eine Relativbewegung von mindestens zwei der Formplatten voneinander weg kann ein Spalt zwischen den beiden Formplatten erzeugt werden, welcher den oben beschriebenen Öffnungshub auslösen kann. Der Spalt kann hierbei identisch sein mit dem Prägespalt, welcher beim Spritzprägen zur Ausführung eines Prägehubs eingesetzt werden kann. In diesem Falle kann der Öffnungshub als eine Bewegung der beiden Formplatten beschrieben werden, welcher in entgegengesetzter Richtung zu dem oben beschriebenen Prägehub ausgeübt werden kann.

Alternativ oder zusätzlich können die mindestens zwei Formplatten derart zueinander angeordnet sein, dass sie eine so genannten "Tauchkante" ausbilden, welche dazu eingerichtet ist, um die Kavität abzudichten. Die Tauchkante kann üblicherweise derart erzeugt werden, dass die beiden Formplatten jeweils über eine Kante verfügen und die beiden Kanten einander teilweise flächenhaft berühren, wobei einerseits ein nur an einer Stelle unterbrochener Spalt zwischen den beiden Platten verbleibt und andererseits durch eine flächenhafte Berührung der beiden Kanten nach wie vor ein vollständiges Abdichten der Kavität nach außen erfolgen kann. Die Tauchkante ist somit dazu eingerichtet, um bei geschlossenem Prägespalt zu verhindern, dass während des Spritzprägens weitere Kunststoffschmelze in eine Trennebene des Werkzeugs eindringt. Für weitere Einzelheiten in Bezug auf die Tauchkante wird auf die Ausführungsbeispiele und die Figuren verwiesen. In der vorliegenden Ausgestaltung kann durch eine Bewegung mindestens einer der beiden Formplatten, welche die Tauchkante erzeugen, ebenfalls der mindestens eine Öffnungshub ausgeführt werden, wobei sich gleichzeitig die Form der Tauchkante ändern kann. Hierbei ist es besonders vorteilhaft, wenn die Änderung der Form der Tauchkante derart erfolgt, dass einerseits der gewünschte Öffnungshub ausgeführt wird, andererseits aber die Kavität nach außen hin verschlossen bleibt, um ein etwaiges Auslaufen der Kunststoffschmelze aus der Kavität zu vermeiden.

In einer weiteren, ebenfalls bevorzugten Ausgestaltung umgibt hierbei mindestens ein beweglicher, vorzugsweise ein axial beweglicher Prägerahmen die Formplatten derart, dass der Prägerahmen die Kavität durch Federkraft und/oder auf hydraulische Art und/oder auf pneumatische Art abdichtet. Dies kann alternativ oder zusätzlich zur Abdichtung mittels der mindestens einen Tauchkante erfolgen.

In einer weiteren, ebenfalls bevorzugten Ausgestaltung kann das Werkzeug über mindestens einen beweglichen Stempel verfügen, welcher vorzugsweise in die Kavität eingebracht ist. In dieser Ausgestaltung kann der mindestens eine Öffnungshub bevorzugt durch eine Bewegung des Stempels in der Kavität ausgeführt werden. Zum Bewegen der Stempelfläche kann der Stempel vorzugsweise einen Antrieb aufweisen, wobei das Bewegen der Stempelfläche durch Betätigen des Antriebs erfolgen kann. Als Antrieb kann hierbei insbesondere ein elektrischer, hydraulischer, pneumatischer oder mechanischer Antrieb dienen, insbesondere mindestens eines Kernzugs und/oder mindestens ein Auswerfer.

Zur Durchführung des erfindungsgemäßen Verfahrens kann eine elektronisch steuerbare Einrichtung, insbesondere eine Datenverarbeitungsanlage, vorgesehen sein, welche einen Programmcode, der zur Durchführung des Verfahrens eingerichtet ist, aufweist und ausführt.

### Vorteile der Erfindung

Das vorliegende Verfahren ermöglicht es insbesondere, in den Kunststoff eingesetzte, vorzugsweise anisometrische Füllstoffe in eine jeweilig gewünschte Raumrichtung auszurichten. Im Gegensatz zu dem herkömmlichen Spritzgießverfahren kann hierdurch die Orientierung der Füllstoffe gezielt gesteuert werden.

Insbesondere bei dünnwandigen Bauteilen können somit auch Eigenschaften des hergestellten Formkörpers in Richtungen, welche senkrecht zur Fließrichtung liegen, beeinflusst werden. Damit lässt sich beispielsweise in wärmeleitfähigen Kunststoffen durch eine entsprechende Ausrichtung der darin zugegebenen wärmeleitfähigen Füllstoffe die Wärmeleitfähigkeit vor allem in Richtung der Dicke des Formkörpers, die senkrecht zur Fließrichtung angeordnet sein kann, erhöhen. Derartige Bereiche in dem Formkörper, in welchem die wärmeleitfähigen Füllstoffe vorzugsweise in Richtung der Dicke des Formkörpers ausgerichtet sind, können bevorzugt dazu eingesetzt werden, um entstehende Verlustwärme innerhalb des Formkörpers an die Umgebung abzuleiten.

### Kurze Beschreibung der Figuren

Bevorzugte Ausführungsbeispiele der vorliegenden Erfindung sind in den Figuren dargestellt und werden in der nachfolgenden Beschreibung ohne Beschränkung der Allgemeinheit näher erläutert. Hierbei zeigen:

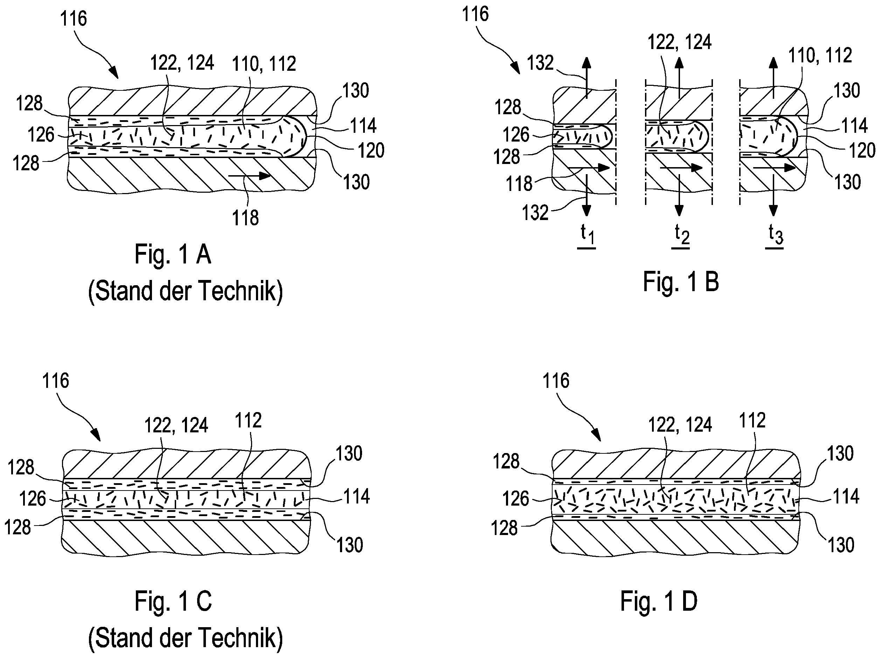

- Figur 1A bis 1D: eine schematische Gegenüberstellung eines Flusswegs einer Kunststoffschmelze während eines Einspritzvorgangs in einer Kavität eines Werkzeugs in einem Verfahren gemäß dem Stand der Technik (Figur 1A) und in einem erfindungsgemäßen Verfahren (Figur 1B) sowie schematische Gegenüberstellung einer sich jeweils ausbildenden Schichtstruktur in der Kavität gemäß dem Stand der Technik (Figur 1C) und nach dem erfindungsgemäßen Verfahren (Figur 1D) in Form von Querschnitten durch das Werkzeug;

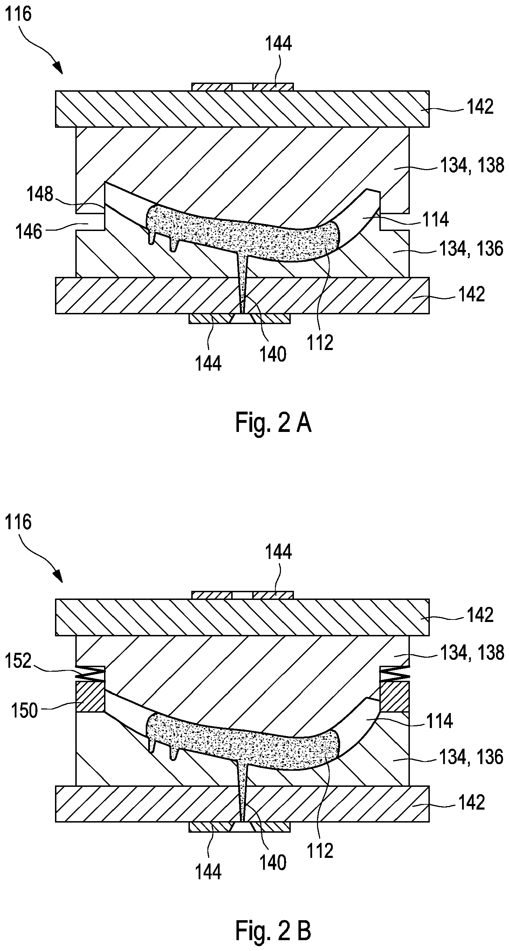

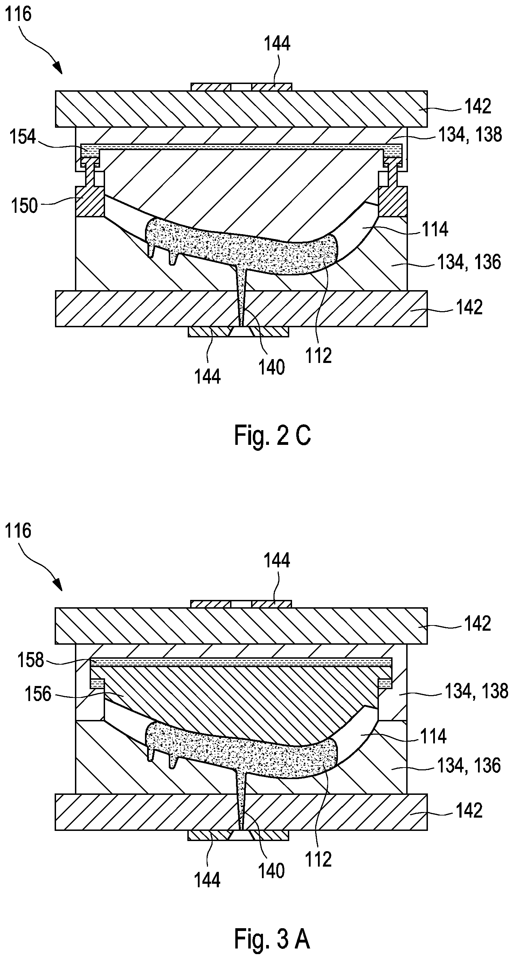

- Figur 2A bis 2C: Ausführungsbeispiele für eine Prägebewegung bei Einsatz eines Hauptachsenprägens mittels einer Tauchkante (Figur 2A) oder über bewegliche Prägerahmen (Figur 2B und 2C), wobei der Prägerahmen die Kavität bevorzugt mittels Federkraft (Figur 2B) oder auf hydraulische oder pneumatische Weise (Figur 2C) abdichten kann; und

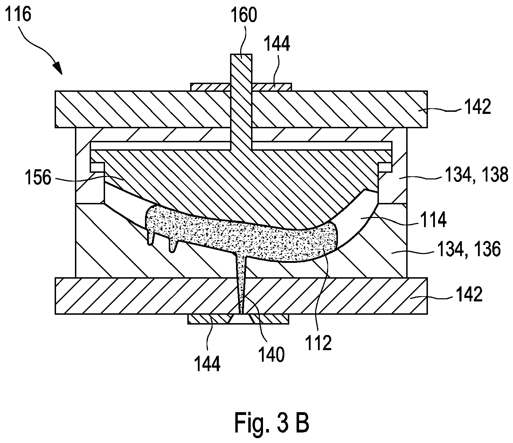

- Figur 3A bis 3B: Ausführungsbeispiele für eine Prägebewegung bei Einsatz eines Nebenachsenprägens mittels eines Stempels, wobei eine Bewegung des Stempels vorzugsweise mittels Kernzugfunktionen (Figur 3A) oder über Auswerfer (Figur 3B) erfolgen kann.

### Ausführungsformen der Erfindung

Figur 1 zeigt schematisch einerseits eine Gegenüberstellung eines Flusswegs 110 einer Kunststoffschmelze 112 während eines Einspritzvorgangs in einer Kavität 114 eines Werkzeugs 116 in einem Verfahren gemäß dem Stand der Technik (Figur 1A) und in einem erfindungsgemäßen Verfahren (Figur 1B) sowie andererseits eine Gegenüberstellung einer sich jeweils ausbildenden Schichtstruktur in dem Verfahren gemäß dem Stand der Technik (Figur 1C) beziehungsweise in dem erfindungsgemäßen Verfahren (Figur 1D) in Form von Querschnitten durch das Werkzeug 116. Zur Vereinfachung der schematischen Darstellung ist die Kavität 114 in den Ausführungsbeispielen in Figur 1 jeweils in Form einer zylindrischen Röhre ausgeführt, während sie im Allgemeinen jedoch nahezu jede beliebige Form annehmen kann.

In den in den Figuren 1A bis 1D dargestellten Ausführungsbeispielen umfasst die Kunststoffschmelze 112, welche sich in Fließrichtung 118 bewegt und hierbei eine Fließfront 120 ausbildet, Füllstoffe 122, welche bevorzugt in einer anisometrischen Form 124 vorliegen. Die anisometrische Form 124 der Füllstoffe 122 wird in den Figuren 1A bis 1D durch eine Darstellung der Füllstoffe 122 in Form von Strichen zum Ausdruck gebracht, wobei die Striche repräsentativ sowohl für quasi-eindimensionale Körper wie Fasern, in welchen die als Länge bezeichnete Ausdehnung des Körpers in einer Raumrichtung die Länge in die beiden anderen Raumrichtungen übersteigt, oder für quasi-zweidimensionale Körper wie Plättchen, in welchen die Ausdehnung des Körpers in zwei Raumrichtungen die Ausdehnung des Körpers in die dritte Raumrichtung übertrifft, stehen können. Die jeweils in einer Flächeneinheit dargestellte Anzahl der Striche repräsentiert hierbei die in den jeweiligen Bereichen in der Kunststoffschmelze 112 auftretende Dichte der Füllstoffe 122.

In den in den Figuren 1A bis 1D dargestellten Ausführungsbeispielen weist die Kunststoffschmelze 112 in der Kavität 114 weiterhin jeweils eine Kernzone 126 und eine, auch als "Scherschicht" bezeichnete Randzone 128 auf, wobei die Randzone 128 jeweils an Wände 130 der hier beispielhaft in Form einer zylindrischen Röhre ausgestalteten Kavität 114 angrenzt und so die Kernzone 126 umgibt. Aus den in den Figuren 1C und 1D dargestellten Querschnitten durch das Werkzeug 116 geht hervor, dass die Schichtstruktur in dem Verfahren gemäß dem Stand der Technik in Figur 1C eine im Vergleich zur Kernzone 126 vergleichsweise breite Randzone 128 aufweist, während die Randzone 128 in dem erfindungsgemäßen Verfahren gemäß Figur 1D im Vergleich zur Kernzone 126 vergleichsweise schmal ist. In Folge des unterschiedlichen Verhältnisses der Dicke der Randzone 128 zur Dicke der Kernzone 126 in beiden Fällen zeigt sich auch eine verschiedene Ausrichtung der Füllstoffe 122 in der Kunststoffschmelze 112. Dies kann sich insbesondere dadurch ergeben, dass die Füllstoffe 122 in der Randzone überwiegend parallel zur Fließrichtung 118 und somit zu den Wänden 130 der Kavität 114 orientiert sind, während sich die Füllstoffe 122 in der Kernzone 126 überwiegend senkrecht zur Fließrichtung 118 und somit zu den Wänden 130 der Kavität 114 ausrichten.

Ein Vergleich zwischen den Figuren 1A und 1C, die den Stand der Technik darstellen, einerseits, und den Figuren 1B und 1D, welche das erfindungsgemäße Verfahren zeigen, andererseits, zeigt, dass sich durch eine Ausübung von einer oder mehrerer Öffnungsbewegungen des Werkzeugs 116 während des Einspritzvorgangs und/oder während einer Nachdruckphase eine Ausdehnung der Dicke der Kernschicht 126 erzielen lässt, während gleichzeitig die an den Wänden 130 der Kavität 114 auftretenden Scher- und/oder Randschichten 128 nur sehr schmal ausgeprägt sind. Bevorzugt richtet sich dadurch ein Teil der Füllstoffe 122 in der Kunststoffschmelze 112 möglichst senkrecht zu der 118 Fließrichtung der Kunststoffschmelze 122 aus. In Figur 1C sind als Öffnungsbewegungen drei Zustände, zu den jeweiligen Zeiten t₁, t₂ und t₃, des Öffnungshubs 132 des Werkzeugs 116 schematisch dargestellt, wobei nach dem Öffnungshub 132 wiederum ein Druck auf die Kunststoffschmelze 112 aufgebracht wird (nicht dargestellt). Jeder Öffnungshub 132 kann die während des Einfüllvorgangs in der Kunststoffschmelze 112 auftretenden Strömungen beeinflussen, welche sich ihrerseits auf die Orientierung der darin eingebrachten Füllstoffe 122 in der schematisch in Figur 1D dargestellten Weise auswirken können.

Ausführungsbeispiele für bevorzugte Ausgestaltungen des Werkzeugs 116 und der mit dem Werkzeug 116 vorzugsweise ausführbaren Öffnungsbewegungen finden sich in den Figuren 2A bis 3C.

Figur 2A zeigt ein Werkzeug 116, welches über eine Kavität 114 verfügt, wobei die Kavität hier als Hohlraum zwischen zwei aneinander gefügten Formplatten 134 gebildet wird, welche üblicherweise als düsenseitige Formplatte 136 und als schließseitige Formplatte 138 bezeichnet werden. Die düsenseitige Formplatte 136 verfügt hierbei über eine Öffnung, in welche eine Einspritzeinrichtung (Düse) 140 eingebacht ist, welche das Einbringen der Kunststoffschmelze 112 in die Kavität 114 ermöglicht. Im vorliegenden Ausführungsbeispiel erhält das Werkzeug 116, das insbesondere für den Einsatz im eingangs beschriebenen Hauptachsenprägen ausgestaltet ist, in welchem eine Prägebewegung über die schließseitige Formplatte 138 ausgeführt wird, seine Stabilität durch zwei Aufspannplatten 142, die, mit einem Zentrierring 144 umgeben, die Formplatten 134 gegeneinander pressen. Das Werkzeug 116 weist einen Prägespalt 146 auf, welcher ein Zusammenfahren der beiden Formplatten 134 des Werkzeugs 116 ermöglicht, um die Kavität 114 auszubilden. Um zu verhindern, dass ein Teil der Kunststoffschmelze 112 durch den Prägespalt 146 aus der Kavität 114 entweichen kann, sind in dem Ausführungsbeispiel gemäß Figur 2A die Formplatten 134 derart zueinander angeordnet, dass sie eine Tauchkante 148 ausbilden, welche die Kavität 114 derart abdichtet, dass die Kavität 114 trotz des Prägespalts 146 vollständig verschlossen bleibt. Die durch eine Öffnung des Prägespalts 146 vergrößerte Kavität 114 kann zu ca. 80 % bis 95 % mit Kunststoffschmelze 112 gefüllt werden, was in etwa 100 % eines Volumens des zu fertigenden Formkörpers entspricht. Bei einem Schließen des Werkzeugs 116 kann die Kunststoffschmelze 112 durch eine Schließbewegung, insbesondere in Form eines Prägehubs, verpresst werden. Umgekehrt kann sich durch eine Relativbewegung der beiden Formplatten 134 voneinander weg die Tauchkante 148 derart verändern, dass dadurch der Öffnungshub 132 in Form eines Öffnens der Kavität 114 oder eines Teilbereichs davon ausgeführt werden kann. Nach dem Öffnungshub 132 kann die Tauchkante 148 wieder ihre ursprüngliche Position einnehmen oder vorzugsweise direkt in eine Schließbewegung übergehen, wodurch die Kunststoffschmelze 112 insbesondere mittels eines weiteren Prägehubs erneut verpresst werden kann.

Die Figuren 2B und 2C zeigen jeweils ein weiteres Werkzeug 116, in welchem der Öffnungshub 132 in Form eines Öffnens der Kavität 114 oder eines Teilbereichs davon durch eine Relativbewegung der beiden Formplatten 134 voneinander weg ausgeführt werden kann. Im Unterschied zu dem in Figur 2A dargestellten Werkzeug, in welchem die Abdichtung der Kavität 114 mittels der Tauchkante 148 erfolgt, wird in diesen beiden Ausführungsbeispielen die Kavität 114 unter Zuhilfenahme eines axial beweglichen Prägerahmens 150 abgedichtet. Während die Abdichtung in der Ausführung gemäß Figur 2B mittels mindestens einem, in den Prägespalt 146 eingebrachten Paar an Sprungfedern 152 erfolgt, wird zur Abdichtung in der Ausführung gemäß Figur 2C ein hydraulisches oder pneumatisches System 154 eingesetzt. Für weitere Einzelheiten in Bezug auf die Figuren 2B und 2C wird auf die Beschreibung der Figur 2A verwiesen.

Die Figuren 3A und 3B zeigen jeweils ein weiteres Werkzeug 116, welches insbesondere für den Einsatz im eingangs beschriebenen Nebenachsenprägen ausgestaltet ist. Hierein kann der zum Öffnen der Kavität 114 oder eines Teilbereichs davon erforderliche Öffnungshub 132 durch eine Bewegung eines in die Kavität 114 eingebrachten Stempel 156 ausgeführt werden. In diesen Ausführungsbeispielen bleiben zudem die beiden Formplatten 134, welche, ohne über einen Prägespalt 146 zu verfügen, fest aufeinander gepresst sind, während des Öffnungshubs 132 fest zueinander positioniert. Andere Ausgestaltungen, beispielsweise eine Kombination eines Werkzeugs gemäß einer oder mehrerer der Figuren 2A bis 2C mit einem Werkzeug gemäß einer oder beider der

Figuren 3A und 3B sind jedoch denkbar. Für weitere Einzelheiten in Bezug auf die Figuren 3A und 3B wird auf die Beschreibung der Figuren 2A bis 2C verwiesen.

In der Ausführung gemäß Figur 3A wird ein hydraulisches oder pneumatisches System 158 eingesetzt, welches dazu eingerichtet, um Kernzugfunktionen ausführen zu können. In diesem Ausführungsbeispiel kann damit der Stempel 156 innerhalb der Kavität 114 des Werkzeugs 116 eine Bewegung ausführen. Der Öffnungshub 132 kann hier beispielsweise durch eine Bewegung des Stempels 156 von der düsenseitigen Formplatte 136 weg ausgeübt werden. Nach dem Öffnungshub 132 kann der Stempel 156 wieder seine ursprüngliche Position einnehmen oder vorzugsweise gleich in eine Position übergehen, in welcher Druck auf die Kunststoffschmelze 112 aufgebracht werden kann.

In der Ausführung gemäß Figur 3B kann dagegen der Stempel 156 mittels eines Kolbens 160, welcher Bestandteil eines Auswerfers sein kann, eine Bewegung innerhalb der Kavität 114 des Werkzeugs 116 ausführen. Der Öffnungshub 132 kann in diesem Ausführungsbeispiel durch eine, mittels des Kolbens 160 initiierte Bewegung des Stempels 156 von der düsenseitigen Formplatte 136 weg ausgeübt werden. Nach dem Öffnungshub 132 kann auch hier der Stempel 156 wieder seine ursprüngliche Position oder, vorzugsweise, eine Position einnehmen, in welcher Druck auf die Kunststoffschmelze 112 aufgebracht werden kann.

### Liste der Bezugszeichen

- 110: Flussweg
- 112: Kunststoffschmelze
- 114: Kavität
- 116: Werkzeug
- 118: Fließrichtung
- 120: Fließfront
- 122: Füllstoffe
- 124: anisometrische Form
- 126: Kernzone
- 128: Randzone
- 130: Wände der Kavität
- 132: Öffnungshub
- 134: Formplatte
- 136: düsenseitige Formplatte
- 138: schließseitige Formplatte
- 140: Einspritzeinrichtung (Düse)
- 142: Aufspannplatten
- 144: Zentrierring
- 146: Prägespalt
- 148: Tauchkante
- 150: beweglicher Prägerahmen
- 152: Sprungfeder
- 154: hydraulisches oder pneumatisches System
- 156: beweglicher Stempel
- 158: hydraulisches oder pneumatisches System
- 160: Kolben

## Patentansprüche

1. Verfahren zur Beeinflussung der Orientierung von anisometrischen Füllstoffen (122) in einer Kunststoffschmelze (112) während einer Herstellung eines Formkörpers in einem Spritzgießverfahren, mit den folgenden Schritten:
a) Bereitstellen eines Werkzeugs (116), welches mindestens eine Kavität (114) zur Aufnahme einer Kunststoffschmelze (112) aufweist;
b) Einbringen der Kunststoffschmelze (112) in die Kavität (114) unter Druck;
c) Aufbringen eines Druckes auf die Kunststoffschmelze (112) in der Kavität (114);
d) Abkühlen oder Abkühlenlassen der Kunststoffschmelze (112) in der Kavität (114) zumindest teilweise unter Aufrechterhaltung des Drucks, wodurch der Formkörper gebildet wird; und
e) Entformen des Formkörpers aus der Kavität (114);
**dadurch gekennzeichnet, dass** während Schritt b) und/oder während Schritt c) mindestens ein Öffnungshub (132) in Form eines Öffnens mindestens eines Teilbereichs der Kavität (114) derart vorgenommen wird, dass in zumindest einem Teil der in der Kavität (114) vorliegenden Kunststoffschmelze (112) Quell- und/oder Dehnströmungen, welche die Orientierung der anisometrischen Füllstoffe (122) in der Kunststoffschmelze (112) beeinflussen, hervorgerufen werden, und im Anschluss an den Öffnungshub (132) das Aufbringen eines Druckes auf die Kunststoffschmelze (112) gemäß Schritt c) erfolgt.

2. Verfahren nach dem vorangehenden Anspruch, **dadurch gekennzeichnet, dass** die Kunststoffschmelze (112) in Folge des Öffnungshubs (132) eine Expansion erfährt, so dass sich ein Teil der anisometrischen Füllstoffe (122) in der Kunststoffschmelze (112) senkrecht zu einer Fließrichtung (118) der Kunststoffschmelze (112) ausrichtet.

3. Verfahren nach einem der vorangehenden Ansprüche, **dadurch gekennzeichnet, dass** die anisometrischen Füllstoffe (122) in Form von Fasern oder Plättchen vorliegen.

4. Verfahren nach einem der vorangehenden Ansprüche, **dadurch gekennzeichnet, dass** das Werkzeug (116) über mindestens zwei unabhängig voneinander bewegliche Formplatten (134) verfügt, welche die Kavität (114) ausbilden, und der Öffnungshub (132) durch eine Bewegung mindestens einer der Formplatten (134) ausgeführt wird.

5. Verfahren nach dem vorangehenden Anspruch, **dadurch gekennzeichnet, dass** sich durch die Bewegung mindestens einer der Formplatten (134) ein Prägespalt (146) zwischen den Formplatten (134) derart ändert, dass dadurch der Öffnungshub (132) ausgeführt wird.

6. Verfahren nach einem der beiden vorangehenden Ansprüche, **dadurch gekennzeichnet, dass** die Formplatten (134) derart zueinander angeordnet sind, dass sie mindestens eine Tauchkante (148) ausbilden, wobei die Tauchkante (148) die Kavität (114) abdichtet, und sich die Tauchkante (148) durch die Bewegung mindestens einer der Formplatten (134) derart ändert, dass dadurch der Öffnungshub (132) ausgeführt wird.

7. Verfahren nach einem der drei vorangehenden Ansprüche, **dadurch gekennzeichnet, dass** mindestens ein beweglicher Prägerahmen (150) die Formplatten (134) umgibt, wobei der Prägerahmen (150) die Kavität hydraulisch und/oder pneumatisch und/oder durch Federkraft abdichtet.

8. Verfahren nach einem der vorangehenden Ansprüche, **dadurch gekennzeichnet, dass** in die Kavität (114) weiterhin mindestens ein beweglicher Stempel (156) eingebracht ist und der Öffnungshub (132) durch eine Bewegung des Stempels (156) innerhalb der Kavität (114) ausgeführt wird.

9. Verfahren nach dem vorangehenden Anspruch, **dadurch gekennzeichnet, dass** die Bewegung des Stempels (156) mittels mindestens mittels eines Kernzugs und/oder über mindestens einen Auswerfer erfolgt.

10. Verfahren nach einem der vorangehenden Ansprüche, **dadurch gekennzeichnet, dass** das Werkzeug (116) über mindestens eine Einrichtung zur Erwärmung und/oder Abkühlung mindestens eines Teils des Werkzeugs (116) verfügt, mittels welcher die Kunststoffschmelze (112) im Werkzeug (116) aktiv erwärmt oder abgekühlt wird.

11. Verfahren nach einem der vorangehenden Ansprüche, **dadurch gekennzeichnet, dass** das Verfahren derart als diskontinuierliches Verfahren ausgeführt wird, dass nach Schritt e) das Verfahren erneut mit Schritt b) fortgesetzt wird.

## Claims

1. Process for influencing the orientation of anisometric fillers (122) in a plastics melt (112) during production of a moulding in an injection-moulding process, with the following steps:
a) provision of a mould (116) which has at least one cavity (114) for receiving a plastics melt (112);
b) introduction of the plastics melt (112) into the cavity (114) under pressure;
c) application of a pressure to the plastics melt (112) in the cavity (114);
d) active or passive cooling of the plastics melt (112) in the cavity (114) at least to some extent while maintaining the pressure, thus forming the moulding; and
e) demoulding of the moulding from the cavity (114);
**characterized in that** during step b) and/or during step c) at least one opening movement (132) in the form of opening of at least one subregion of the cavity (114) is performed in a manner that, in at least one portion of the plastics melt (112) present in the cavity (114), results in source- and/or extensional-flow effects which influence the orientation of the anisometric fillers (122) in the plastics melt (112), and the opening movement (132) is followed by the application of a pressure to the plastics melt (112) according to step c).

2. Process according to the preceding claim, **characterized in that** the opening movement (132) is followed by expansion of the plastics melt (112) in a manner that orientates a portion of the anisometric fillers (122) in the plastics melt (112) perpendicularly to a flow direction (118) of the plastics melt (112).

3. Process according to either of the preceding claims, **characterized in that** the anisometric fillers (122) take the form of fibres or platelets.

4. Process according to any of the preceding claims, **characterized in that** the mould (116) has at least two mould plates (134) which can be moved independently of one another and which form the cavity (114), and the opening movement (132) is executed via a movement of at least one of the mould plates (134).

5. Process according to the preceding claim, **characterized in that** the movement of at least one of the mould plates (134) changes a compression gap (146) between the mould plates (134) in a manner such that the opening movement (132) is thus executed.

6. Process according to either of the two preceding claims, **characterized in that** the arrangement of the mould plates (134) in relation to one another is such that they form at least one vertical flash face (148), where the vertical flash face (148) seals the cavity (114), and the movement of at least one of the mould plates (134) changes the vertical flash face (148) in a manner such that the opening movement (132) is thus executed.

7. Process according to any of the three preceding claims, **characterized in that** at least one movable compression frame (150) surrounds the mould plates (134), where the compression frame (150) seals the cavity hydraulically and/or pneumatically and/or via force exerted by a spring.

8. Process according to any of the preceding claims, **characterized in that** at least one movable stamp (156) has moreover been introduced into the cavity (114), and the opening movement (132) is executed via a movement of the stamp (156) within the cavity (114) .

9. Process according to the preceding claim, **characterized in that** the movement of the stamp (156) takes place by means of at least by means of one core puller and/or by way of at least one ejector.

10. Process according to any of the preceding claims, **characterized in that** the mould (116) has at least one facility which is intended for the heating and/or cooling of at least one portion of the mould (116) and by means of which the plastics melt (112) in the mould (116) can be actively heated or cooled.

11. Process according to any of the preceding claims, **characterized in that** the process is executed as batch process in a manner such that after step e) the process continues again with step b).

## Revendications

1. Procédé permettant d'affecter l'orientation de matières de charge anisométriques (122) dans une matière plastique fondue (112) pendant une fabrication d'un corps moulé dans un procédé de moulage par injection, comprenant les étapes suivantes consistant à :
a) prévoir un moule (116) qui présente une cavité (114) pour recevoir une matière plastique fondue (112) ;
b) introduire sous pression la matière plastique fondue (112) dans la cavité (114) ;
c) appliquer une pression sur la matière plastique fondue (112) dans la cavité (114) ;
d) refroidir ou laisser refroidir la matière plastique fondue (112) dans la cavité (114) au moins en partie en maintenant la pression de façon à former le corps moulé ; et
e) démouler le corps moulé de la cavité (114) ;
**caractérisé en ce que** pendant l'étape b) et/ou pendant l'étape c), au moins une course d'ouverture (132) sous la forme d'une ouverture d'au moins une zone partielle de la cavité (114) est effectuée de telle sorte que dans au moins une partie de la matière plastique fondue (112) présente dans la cavité (114), des écoulements de gonflement et/ou d'élongation sont provoqués qui affectent l'orientation des matières de charge anisométriques (122) dans la matière plastique fondue (112), et suite à la course d'ouverture (132), l'application d'une pression sur la matière plastique fondue (112) est effectuée selon l'étape c).

2. Procédé selon la revendication précédente, **caractérisé en ce que** suite à la course d'ouverture (132), la matière plastique fondue (112) est soumise à une expansion de sorte qu'une partie des matières de charge anisométriques (122) dans la matière plastique fondue (112) s'aligne perpendiculairement à une direction d'écoulement (118) de la matière plastique fondue (112).

3. Procédé selon l'une quelconque des revendications précédentes, **caractérisé en ce que** les matières de charge anisométriques (122) sont présentes sous la forme de fibres ou de plaquettes.

4. Procédé selon l'une quelconque des revendications précédentes, **caractérisé en ce que** le moule (116) dispose d'au moins deux plaques de moule (134) mobiles indépendamment l'une de l'autre et qui constituent la cavité (114), et la course d'ouverture (132) est effectuée par un déplacement d'au moins l'une des plaques de moulage (134).

5. Procédé selon la revendication précédente, **caractérisé en ce que** le déplacement d'au moins l'une des plaques de moule (134) modifie un intervalle d'estampage (146) entre les plaques de moule (134) de telle sorte que la course d'ouverture (132) est effectuée de ce fait.

6. Procédé selon l'une des deux revendications précédentes, **caractérisé en ce que** les plaques de moule (134) sont disposées l'une par rapport à l'autre de telle sorte qu'elles constituent au moins un bord plongeant (148), le bord plongeant (148) rendant la cavité (114) étanche, et le bord plongeant (148) étant modifié par le déplacement d'au moins l'une des plaques de moule (134) de telle sorte que la course d'ouverture (132) est effectuée de ce fait.

7. Procédé selon l'une des trois revendications précédentes, **caractérisé en ce qu'**au moins un cadre d'estampage mobile (150) entoure les plaques de moule (134), le cadre d'estampage (150) rendant étanche la cavité de manière hydraulique et/ou pneumatique et/ou par une force de ressort.

8. Procédé selon l'une quelconque des revendications précédentes, **caractérisé en ce que** dans la cavité (114), de plus au moins un poinçon mobile (156) est introduit et la course d'ouverture (132) est effectuée par un déplacement du poinçon (156) à l'intérieur de la cavité (114) .

9. Procédé selon la revendication précédente, **caractérisé en ce que** le déplacement du poinçon (156) est effectué au moyen d'au moins au moyen d'un tire-noyau et/ou par au moins un éjecteur.

10. Procédé selon l'une quelconque des revendications précédentes, **caractérisé en ce que** le moule (116) dispose d'au moins un dispositif pour chauffer et/ou refroidir au moins une partie du moule (116) qui permet de chauffer ou refroidir activement la matière plastique fondue (112) dans le moule (116).

11. Procédé selon l'une quelconque des revendications précédentes, **caractérisé en ce que** le procédé est réalisé comme un procédé discontinu de telle sorte que le procédé se poursuit de nouveau avec l'étape b) après l'étape e).
